# EUROPEAN PATENT APPLICATION

(11) **EP 1 847 920 A2**
(43) Date of publication of application: **24.10.2007**
(21) Application number: 07106243.4
(22) Date of filing: 16.04.2007
(51) Int. Cl.: G06F 3/048

(54) **Intuitive image navigator**

(30) Priority: 21.04.2006 CN 200610074498
(71) Applicant: High Tech Computer Corp., Taoyuan City (TW)
(72) Inventor: Wang, John C., Taoyuan City (TW); Huang, Chien-Hsin, Taoyuan City (TW); Huang, Chung-Tao, Taoyuan City (TW)
(74) Representative: Viering, Jentschura & Partner

(57) **Abstract**

An intuitive image navigator is described. The intuitive image navigator comprises a direction control device and a rotational control ring. The image direction control device moves an image shown on a display of an electronic device, for example, an electronic map on a display of a portable electronic device. The rotational control ring is configured around the image direction control device to control the display condition of the image on the display. The image direction control device provides an intuitive omni-directional variable-speed scrolling function and the rotational control ring provides a stepless variable-speed changing function for browsing the image.

## Description

### Field of the Invention

The present invention generally relates to an intuitive image navigator. More particularly, this invention relates to an intuitive electronic map navigator for a portable electronic device.

### Background of the Invention

Since information technology and semiconductor industry are highly developed, electronic devices are becoming increasingly light, and easy to hold. Therefore, these kinds of portable electronic devices, such as notebook computers, portable televisions, mobile phones, and personal digital assistants (PDAs) are becoming thinner, lighter, shorter and smaller.

Since various application programs and hardware devices are designed to support these smaller portable electronic devices, the portable electronic devices become more convenient for users to operate and execute programs thereon. Among them, global position system (GPS) is the one combines satellite technology with wireless technology to conveniently guide users when driving and walking. Hence, GPS-enabled portable electronic devices are increasingly popular, and the potential thereof is limitless.

Global positioning system needs to be operated with a precise electronic map, and users need suitable hardware to preview and operate the electronic map. Normally, users use a PDA stylus and a touch panel to operate the electronic map on the display of PDA to zoom in or zoom out of the electronic map thereon.

However, the stylus and the touch panel are not very suitable for operating electronic maps on portable electronic devices. Users have to use one hand to hold the portable electronic device and the other hand to move the stylus on the touch panel. Some portable electronic devices are therefore equipped with a joystick to move the electronic map on the display of portable electronic device. In comparison with using a stylus, the use of a joystick is more convenient. However, the joystick is not able to zoom in or zoom out the electronic map on the display. In addition, the portable electronic device equipped only with a joystick does not provide convenience and mobility of usage.

Accordingly, there is a need to provide a user-friendly hardware interface with convenience and mobility for operating the image on portable electronic device.

### Summary of the Invention

It is an objective of the present invention to provide an intuitive image navigator which utilizes a direction control device to move an image on a display and a rotational control ring to alter the display condition of the image, for example, zoom in or zoom out.

It is another objective of the present invention to provide an intuitive image navigator which utilizes a trackball to move an image on a display with variable speeds and a rotational control ring to alter the display condition of the image.

It is yet another objective of the present invention to provide an intuitive image navigator which can be operated intuitively with single hand to move an image on a display and steplessly alter the display condition of the image.

It is still another objective of the present invention to provide an electronic device with an intuitive image navigator which a user can conveniently operate an image on the electronic device with the intuitive image navigator.

To accomplish the above objectives, the present invention provides an intuitive image navigator which comprises a direction control device and a rotational control ring. The direction control device is provided to control a moving direction of an image. The rotational control ring is configured to encircle the direction control device which is provided to alter the display condition of the image. The direction control device may be an omni-directional control device, for example, a trackball, an omni-directional pad or a joystick. The joystick may be an omni-directional variable-magnitude joystick or an omni-directional constant-magnitude joystick. Alternatively, the direction control device may be a fixed directional control device, for example, a four-way directional pad, an eight-way directional pad, or a joystick. The fixed directional joystick may be a fixed-directional variable-magnitude joystick or a fixed-directional constant-magnitude joystick. The direction control device may be a trackball and a directional pad encircling the trackball, and the rotational control ring encircles the directional pad. Preferably, the direction control device is a trackball and the rotational control ring is an omni-directional pad. The display condition of the image refers to, but is not limited to, the size, brightness, contrast, color or angle of the image.

Another aspect of the present invention is to provide an electronic device with an intuitive image navigator. The electronic device comprises a body, a display configured on the body to display an image thereon, and the foregoing intuitive image navigator configured on the body to control the image shown on the display. The electronic device is preferably a portable electronic device, for example, a GPS-enabled (Global Position System-enabled) device, a personal digital assistant, a mobile phone, a digital photo viewer, a notebook computer, a digital camera, a digital video recorder or a complex device thereof, for example, a GPS-enabled PDA phone.

The intuitive image navigator of the present invention utilizes a direction control device so that user can intuitively control the image. In addition, the intuitive image navigator of the present invention further adopts a rotational control ring encircling the direction control device so that the user can steplessly alter the display condition of the image, for example, the size of the image, the brightness of the image, the contrast of the image, the color of the image, or the angle of the image. Accordingly, users can continuously move and zoom in/out the electronic map. Furthermore, users can use single hand to intuitively move, zoom in/out and rotate the electronic map.

### Brief Description of the Drawings

The foregoing aspects and many of the attendant advantages of this invention will be more readily appreciated as the same becomes better understood by reference to the following detailed description, when taken in conjunction with the accompanying drawings, wherein:
FIG. 1 illustrates a first preferred embodiment of the intuitive image navigator according to the present invention;
FIG. 2 illustrates a second preferred embodiment of the intuitive image navigator according to the present invention;
FIG. 3 illustrates a third preferred embodiment of the intuitive image navigator according to the present invention;
FIG. 4A to 4C illustrate various embodiments of the directional pad of the third preferred embodiment of the intuitive image navigator according to the present invention;
FIG. 5 illustrates a fourth preferred embodiment of the intuitive image navigator according to the present invention; and
FIG. 6 illustrates a schematic diagram of a portable electronic device with the intuitive image navigator according to the present invention.

### Detailed Description of the Preferred Embodiment

The following description is currently the best implementation of the present invention. This description is not to be taken in a limiting sense but is made merely to describe the general principles of the invention. The scope of the invention should be determined by referencing the appended claims.

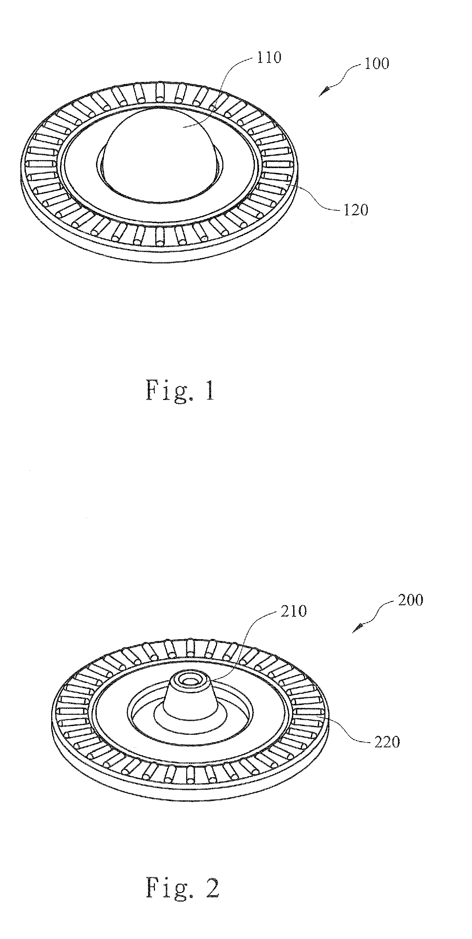

FIG. 1 illustrates a first preferred embodiment of the intuitive image navigator according to the present invention. The intuitive image navigator 100 comprises a direction control device, for example, a trackball 110, and a rotational control ring 120. The trackball 110 is provided to move an image, for example, an electronic map, and the rotational control ring 120 is provided to alter the display condition of the image, for example, size, brightness, contrast, color or angle of the image.

While a user operates an electronic map on a portable electronic device with the intuitive image navigator 100 according to the present invention, the user can use single finger, for example, the thumb, to conveniently operate the electronic map on the portable electronic device. The user can first rotate the trackball 110 to move the electronic map to a destination and then use the rotational control ring 120 encircling the trackball 110 to zoom in/out the electronic map. Alternatively, the rotational control ring 120 may alter the brightness, contrast, color or angle of the electronic map. Since the rotational control ring 120 is intelligently configured around the trackball 110, the user may first move the electronic map to the destination then directly alter the display condition of the electronic map with the rotational control ring 120 without removing his/her finger. Since the rotational control ring 120 is configured within a completely controllable area of the user's finger, the user can continuously rotate the rotational control ring 120 to zoom in/out the electronic map to a desired scale. The user does not have to repeatedly lift finger up and put finger down upon the rotational control ring 120. Therefore, the operating efficiency of a stepless image navigator can be effectively improved. Alternatively, the user may also use one finger, such as the forefinger, to rotate the rotational control ring 120, and another finger, such as the thumb, to operate the trackball 110.

While rotating the trackball 110, the user may change the rotational speed and direction of the trackball 110 to intuitively change the moving speed and direction of the electronic map. In addition, the rotational control ring 120 may further provide a stepless variable-speed function to alter the display condition of the electronic map. Therefore, a user may use the intuitive image navigator 100 according to the present invention not only to intuitively and omni-directionally move the electronic map but also use stepless variable-speed to zoom in/out of the electronic map.

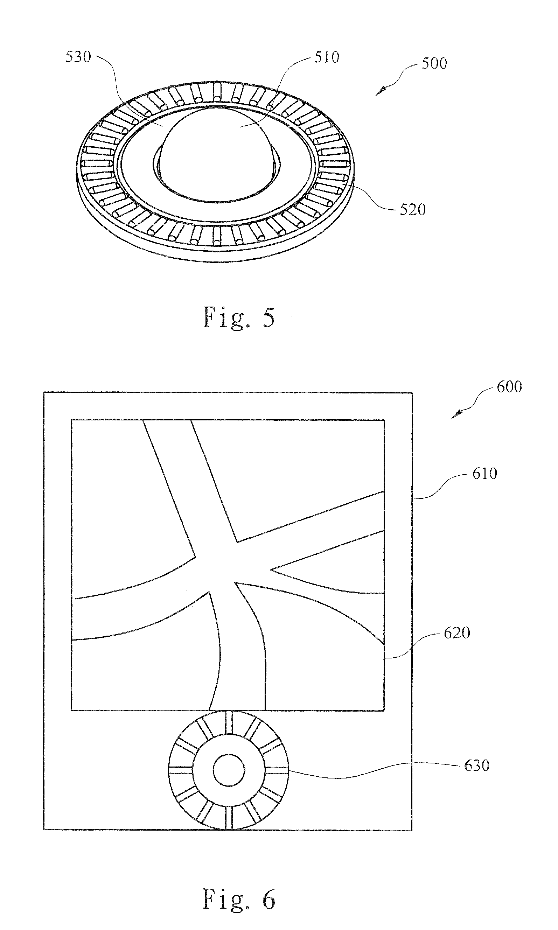

Referring to FIG. 6, a portable electronic device is equipped with an intuitive image navigator according to the present invention. The portable electronic device may be a GPS-enabled device, a personal digital assistant (PDA), a mobile phone, a digital photo viewer, a notebook computer, a PDA phone or any other devices with the function for moving and zooming in/out an image thereon. The portable electronic device with the intuitive image navigator thus is provided for conveniently browsing the image on the display thereon by user's finger. Referring to FIG. 6, a portable electronic device 600 comprises a body 610, a display 620 configured on the body 610 to display an image thereon and an intuitive image navigator 630 for browsing the image shown on the display 620.

For conveniently browsing the image, the intuitive image navigator according to the present invention may utilize various direction control devices in combination with a rotational control ring to quickly browse the image. Referring to FIG. 2, a second preferred embodiment of the intuitive image navigator according to the present invention is illustrated. The intuitive image navigator 200 comprises a direction control device, for example, a joystick 210, and a rotational control ring 220. The joystick 210 is provided to move an image, for example, an electronic map, and the rotational control ring 220 is provided to alter the display condition, for example, the size, brightness, contrast, color and angle of the image. The joystick 210 may be an omni-directional variable-magnitude joystick, an omni-directional constant-magnitude joystick, a fixed-directional variable-magnitude joystick, or a fixed-directional constant-magnitude joystick.

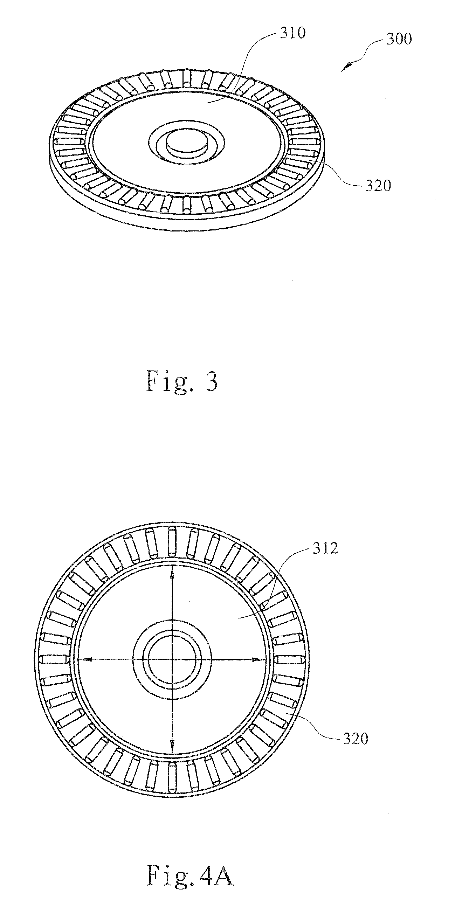

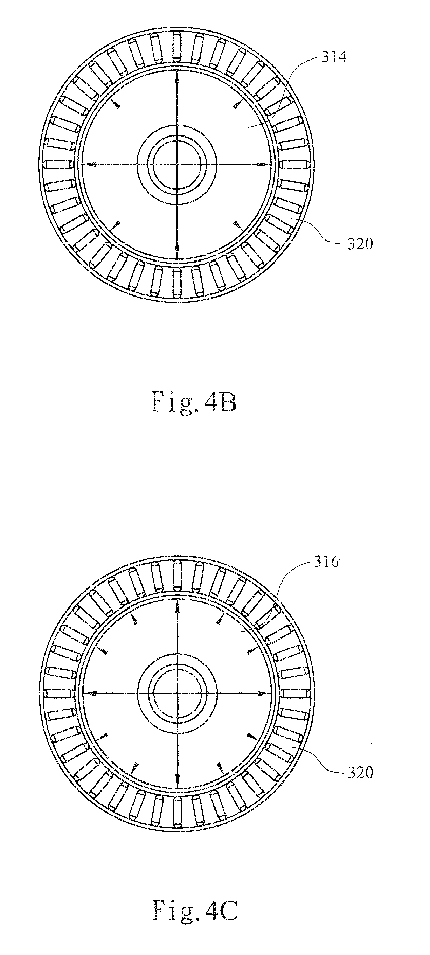

Referring to FIG. 3, a third preferred embodiment of the intuitive image navigator according to the present invention is illustrated. In addition, various embodiments of the directional pad of the third preferred embodiment of the intuitive image navigator according to the present invention are illustrated in FIG. 4A to 4C. The third embodiment of the intuitive image navigator 300 comprises a directional pad 310 and a rotational control ring 320. The directional pad 310 controls the movement and/or speed of the electronic map and the rotational control ring 320 controls the display condition of the electronic map. Accordingly, a user can conveniently browse the electronic map with the intuitive image navigator. The directional pad 310 may be a four-way directional pad 312 shown in FIG. 4A, an eight-way directional pad 314 shown in FIG. 4B, or an omni-directional pad 316 shown in FIG. 4C. In cooperation with the rotational control ring 320, a user can quickly and conveniently browse the image.

Referring to FIG. 5, a fourth preferred embodiment of the intuitive image navigator according to the present invention is illustrated. The intuitive image navigator 500 comprises a trackball 510, a rotational control ring 520, and a directional pad 530. A User can use the trackball 510 to move the electronic map in a small area, the directional pad 530 to move the electronic map in a wide area, and the rotational control ring 520 to zoom in/out the electronic map.

The intuitive image navigator according to the present invention utilizes a direction control device to provide the function of intuitive, omni-directional variable-speed movement of the electronic map, and a rotational control ring encircling the direction control device to provide the function of stepless, variable-speed zoom in/out the electronic map. A user can continuously move and zoom in/out of the electronic map without removing his/her finger from the intuitive image navigator. A user can use single hand, preferably the thumb, to perform intuitive omni-directional variable-speed scrolling and stepless variable-speed zooming of the electronic map.

The intuitive image navigator of the present invention can be used to conveniently browse an electronic map or any other images, for example, photo, document in a omni-directional way. Therefore, the portable electronic device may be a GPS-enabled device, a PDA, a mobile phone, a digital photo viewer, a notebook computer, a PDA phone, a GPS-enabled PDA phone or any other devices with the function for moving and zooming in/out an image thereon.

As is understood by a person skilled in the art, the foregoing preferred embodiments of the present invention are illustrative of the present invention rather than limiting of the present invention. It is intended that various modifications and similar arrangements be included within the spirit and scope of the appended claims, the scope of which should be accorded the broadest interpretation so as to encompass all such modifications and similar structures.

## Claims

1. An intuitive image navigator, comprising:
a direction control device to control a direction of an image; and
a rotational control ring encircling the direction control device to alter a display condition of the image.

2. The intuitive image navigator of claim 1, wherein the direction control device comprises an omni-directional control device.

3. The intuitive image navigator of claim 2, wherein the omni-directional control device comprises a trackball.

4. The intuitive image navigator of claim 2, wherein the omni-directional control device is an omni-directional pad.

5. The intuitive image navigator of claim 2, wherein the omni-directional control device is a joystick.

6. The intuitive image navigator of claim 5, wherein the joystick is an omni-directional variable-magnitude joystick or an omni-directional constant-magnitude joystick.

7. The intuitive image navigator of claim 1, wherein the direction control device comprises a fixed directional control device.

8. The intuitive image navigator of claim 7, wherein the fixed directional control device is a four-way directional pad or an eight-way directional pad.

9. The intuitive image navigator of claim 7, wherein the fixed directional control device comprises a joystick.

10. The intuitive image navigator of claim 9, wherein the joystick is a fixed-directional variable-magnitude joystick or a fixed-directional constant-magnitude joystick.

11. The intuitive image navigator of claim 1, wherein the direction control device is a trackball and the rotational control ring is an omni-directional pad.

12. The intuitive image navigator of claim 1, wherein the display condition of the image is the size, brightness, contrast, color or angle of the image.

13. An electronic device with an intuitive image navigator, comprising:
a body;
a display configured on the body to display an image thereon; and
an intuitive image navigator configured on the body to control the image shown on the display, wherein the intuitive image navigator comprises:
a direction control device to control the direction of motion of the image; and
a rotational control ring encircling the direction control device to alter a display condition of the image.

14. The electronic device with an intuitive image navigator of claim 13, wherein the direction control device is a trackball, a directional pad or a joystick.

15. The electronic device with an intuitive image navigator of claim 14, wherein the directional pad is an omni-directional pad, a four-way directional pad or an eight-way directional pad.

16. The electronic device with an intuitive image navigator of claim 14, wherein the joystick is an omni-directional variable-magnitude joystick, an omni-directional constant-magnitude joystick, a fixed-directional variable-magnitude joystick, or a fixed-directional constant-magnitude joystick.

17. The electronic device with an intuitive image navigator of claim 13, wherein the direction control device is a trackball and the rotational control ring is an omni-directional pad.

18. The electronic device with an intuitive image navigator of claim 13, wherein the electronic device is a GPS-enabled (Global Position System-enabled) device, a personal digital assistant (PDA), a mobile phone, a digital photo viewer, a notebook computer, a digital camera, a digital video recorder or a complex device thereof.

19. The electronic device with an intuitive image navigator of claim 18, wherein the electronic device is a GPS-enabled device.

20. The electronic device with an intuitive image navigator of claim 18, wherein the complex device is a GPS-enabled PDA phone.

21. The electronic device with an intuitive image navigator of claim 20, wherein the image is an electronic map.
